(19) **Europäisches Patentamt**

**European Patent Office**

**Office européen des brevets**

(11) **EP 1 359 646 A1**

(12) **EUROPÄISCHE PATENTANMELDUNG**

(43) Veröffentlichungstag:
**05.11.2003 Patentblatt 2003/45**

(51) Int Cl.⁷: **H01S 3/067**, H01S 3/098

(21) Anmeldenummer: **02405363.9**

(22) Anmeldetag: **03.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **30.04.2002 EP 02405353**

(71) Anmelder: **ABB Schweiz AG**
**5400 Baden (CH)**

(72) Erfinder:
• **Bohnert, Klaus**
**5452 Oberrohrdorf (CH)**

• **Haroud, Karim**
**1512 Chavannes-sur-Moudon VD (CH)**
• **Frank, Andreas**
**8037 Zürich (CH)**
• **Brändle, Hubert**
**8102 Oberengstringen (CH)**

(74) Vertreter: **ABB Patent Attorneys**
**c/o ABB Schweiz AG,**
**Intellectual Property (CH-LC/IP),**
**Brown Boveri Strasse 6**
**5400 Baden (CH)**

(54) **Faserlaser mit Modenunterdrückung**

(57) Ein Faserlaser (1) weist auf: eine zumindest teilweise als laserverstärkende Faser (13) wirkende Laserfaser (10), einen ersten Endreflektor (11), einen zweiten Endreflektor (12) und ein Mittel zur Modenkopplung (15), das zwischen den beiden Endreflektoren (11,12) angeordnet ist. Der erste Endreflektor (11) ist gegenüber dem zweiten Endreflektor (12) verstimmt und weist eine Doppelbrechung auf für zwei zueinander orthogonale Lichtmoden (s,f; $LP_{01}$,$LP_{11}^{even}$) der Laserfaser (10), die aufgrund ihres Zustandes der linearen Polarisation (s,f) und/oder ihrer transversalen Raumstruktur ($LP_{01}$,$LP_{11}^{even}$) zueinander orthogonal sind. Durch das Mittel zur Modenkopplung (15) sind die zwei zueinander orthogonalen Lichtmoden (s,f; $LP_{01}$, $LP_{11}^{even}$) der Laserfaser (10) miteinander koppelbar. Die Laserschwelle für einen unerwünschten Lichtmode liegt deutlich höher als die Laserschwelle für einen erwünschten Lichtmode. Der Faserlaser (1) ist einfach herstellbar und ermöglicht eine stabile Emission auf genau einem durch seine lineare Polarisation und/oder transversale Raumstruktur definierten Lichtmode (s,f; $LP_{01}$,$LP_{11}^{even}$).

**Fig. 1**

EP 1 359 646 A1

**Beschreibung**

Technisches Gebiet

Die Erfindung bezieht sich auf das Gebiet der Laseroptik. Sie bezieht sich auf einen Faserlaser gemäss dem Oberbegriff des Patentanspruches 1.

Stand der Technik

Ein derartiger, den Oberbegriff des Patentanspruches 1 bildender Faserlaser ist beispielsweise aus der Veröffentlichung D. Pureur et al., *Single-Polarization Fiber Lasers Using Bragg Gratings in Hi-Bi Fibers*, Journal of Lightwave Technology *13*, No.3, März 1995, 350-355 bekannt. Dort ist ein Faserlaser offenbart, der aus einer einstückigen Laserfaser und zwei als Faser-Bragg-Gitter (FBG) ausgebildeten Endreflektoren besteht. Als Pumplichtquelle für den Faserlaser dient ein Diodenlaser. Die Laserfaser ist $Nd^{3+}$dotiert und dient dadurch als laserverstärkende Faser. Durch Einwirkung anisotroper mechanischer Druckkräfte wurde in der Laserfaser eine Doppelbrechung für lineare Polarisation induziert.

Die FBG sind holographisch in die Laserfaser eingeschrieben. Dadurch weisen sie ebenfalls eine Doppelbrechung für lineare Polarisation auf. Um einen der zwei Polarisationmoden im Faserlaser zu unterdrücken sind die beiden FBG mit unterschiedlichen Belichtungsparametern (Anzahl Belichtungspulse, Lichtfluss) eingebracht. Dadurch weisen die beiden FBG eine unterschiedlich starke Doppelbrechung auf. Die Reflexionsmaxima (Bragg-Peaks bei der Bragg-Wellenlänge $\lambda_B$) für entlang der schnellen Achse f der Laserfaser linearpolarisiertes Licht und für entlang der langsamen Achse s der Laserfaser linearpolarisiertes Licht weisen somit unterschiedliche Wellenlängenabstände $\Delta\lambda_{biref}^{FBG1} = (\lambda_{B,s}^{FBG1} - \lambda_{B,f}^{FBG1})$ beziehungsweise $\Delta\lambda_{biref}^{FBG2} = (\lambda_{B,s}^{FBG2} - \lambda_{B,f}^{FBG2})$ auf. Durch axiale Streckung eines der beiden FBG wird dieses FBG gegenüber dem anderen FBG so weit verstimmt (Verschiebung der Bragg-Wellenlänge $\lambda_B$), dass für eine erwünschte Linearpolarisation die entsprechenden Reflexionsmaxima beider FBG im wesentlichen übereinanderliegen. Dadurch ergibt sich für die Reflexionspeaks der beiden FBG für die unerwünschte Linearpolarisation ein Wellenlängenabstand von

$$\text{abs}(\Delta\lambda_{biref}^{FBG1} - \Delta\lambda_{biref}^{FBG2}).$$

Weil sich die Reflexionspeaks für die unerwünschte Polarisation somit weniger stark oder nur noch geringfügig überlappen, sind die Resonatorverluste für die unerwünschte Polarisation grösser, so dass sich verschieden hohe Laserschwellen für die erwünschte und die unerwünschte Polarisation ergeben. Bei entsprechend niedriger Pumpleistung schwingt der Laser ausschliesslich mit der erwünschten Polarisation. Laserschwingungen in dem unerwünschten Polarisationsmode sind somit unterdrückbar.

In der genannten Veröffentlichung von D. Pureur et al. sind $\Delta\lambda_{biref}^{FBG1}$ und $\Delta\lambda_{biref}^{FBG2}$ um etwa 10% verschieden. Es sind beispielsweise Werte von 94 pm (entsprechend 24.1 GHz) und 85.9 pm (entsprechend 22.0 GHz) für $\Delta\lambda_{biref}^{FBG1}$ und $\Delta\lambda_{biref}^{FBG2}$ angegeben. Daraus ergibt sich $\text{abs}(\Delta\lambda_{biref}^{FBG1} - \Delta\lambda_{biref}^{FBG2}) = 8.1$ pm als Wellenlängenabstand der Bragg-Peaks der unerwünschten Polarisation für die beiden FBG. Die Breite der Reflexionspeaks ist als etwa 23.4 pm (entsprechend 6 GHz) angegebenen und ist somit deutlich grösser als der Wellenlängenabstand von 8.1 pm zwischen den Bragg-Peaks der unerwünschten Polarisation für die beiden FBG. Entsprechend ist die unerwünschte Polarisation nur schwach unterdrückt. Bei hohen Pumpleistungen ist darum eine Laseremission auf beiden Polarisationen möglich.

Die Gitter der in der genannten Schrift von D. Pureur et al. beschriebenen Faserlaser weisen ein relativ kleines Reflexionsvermögen R auf (25% bis 62%). Dadurch ergeben sich hohe Resonatorverluste und die Notwendigkeit hoher Pumpleistungen zum Betreiben des Lasers sowie eine geringe Lasereffizienz. Da die beiden FBG zur Erzeugung unterschiedlicher Doppelbrechungen mit unterschiedlichen Belichtungsparametern in die Laserfaser eingebracht sind, ist es nicht ohne weiteres möglich, für beide FBG ein optimal hohes Reflexionsvermögen R zu erreichen. Zudem ist die Herstellung eines solchen Faserlasers aufgrund der unterschiedlichen Herstellungsparameter für die zwei FBG aufwendig.

Wie den Zahlenbeispielen zu entnehmen ist, ist es kaum möglich, in der beschriebenen Weise eine vollständige Unterdrückung der unerwünschten Polarisation bei hohen Pumpleistungen zu erreichen, da die erzeugbaren Wellenlängenabstände $\text{abs}(\Delta\lambda_{biref}^{FBG1} - \Delta\lambda_{biref}^{FBG2})$ deutlich kleiner als die typischen Linienbreiten der Bragg-Peaks sind.

Darstellung der Erfindung

Es ist deshalb Aufgabe der Erfindung, einen Faserlaser der eingangs genannten Art zu schaffen, welcher die oben genannten Nachteile nicht aufweist. Insbesondere soll ein Faserlaser geschaffen werden, der eine starke Unterdrückung von Laserschwingungen eines unerwünschten Lichtmodes gegenüber einem erwünschten Lichtmode aufweist.

Diese Aufgabe löst ein Faserlaser mit den Merkmalen des Patentanspruches 1.

Der erfindungsgemässe Faserlaser weist einen ersten Endreflektor und einen zweiten Endreflektor sowie eine Laserfaser auf. Zumindest ein Teil der Laserfaser wirkt als laserverstärkende Faser. Der erste Endreflektor ist gegenüber dem zweiten Endreflektor verstimmt. Der erste Endreflektor weist für zwei zueinander orthogonale Lichtmoden der Laserfaser eine Doppelbrechung auf, wobei die zwei zueinander orthogonalen Lichtmoden der Laserfaser aufgrund ihres Zustandes der linearen Polarisation und/oder ihrer transversalen Raumstruktur zueinander orthogonal sind. Im Faserlaser oder zwischen den beiden Endreflektoren ist ein Mittel zur Modenkopplung angeordnet, durch welches die zwei zueinander orthogonalen Lichtmoden der Laserfaser miteinander koppelbar sind. Bei sich deutlich überlappenden Reflexionspeaks der beiden Endreflektoren für den erwünschten Lichtmode wird auf diese Weise ein grosser Wellenlängenabstand zwischen Reflexionspeaks der beiden Endreflektoren für den unerwünschten Lichtmode realisiert.

Der Faserlaser weist somit eine starke Unterdrückung von Laserschwingungen eines unerwünschten Lichtmodes gegenüber einem erwünschten Lichtmode auf.Die Laserschwelle für den unerwünschten Lichtmode ist viel höher sein als die Laserschwelle für den erwünschten Lichtmode. Mit Lichtmoden sind hier solche Lichtmoden gemeint, die durch ihren Zustand der linearen Polarisation und/oder ihre transversale Raumstruktur definiert sind. Der Faserlaser ist weiterhin einfach herstellbar und kann Endreflektoren mit hohen Reflexionsvermögen aufweisen. Auch hat der Faserlaser eine hohe Stabilität der Lichtintensität und eine hohe Stabilität der linearen Polarisation und/oder transversalen Raumstruktur des emittierten Laserlichts, wobei diese Eigenschaften auch bei hohen Pump- und Laserleistungen erhalten bleiben.

Ein bevorzugtes Ausführungsbeispiel des Faserlasers kennzeichnet sich dadurch, dass die gegenseitige Verstimmung der Endreflektoren und die Doppelbrechung des ersten Endreflektors derart gewählt sind, dass auf jeder Seite des Mittels zur Modenkopplung genau ein durch seinen Zustand der linearen Polarisation und/oder seine transversale Raumstruktur definierter Lichtmode zu Laserschwingungen fähig ist. Die Überlappung von Reflexionspeaks der beiden Endreflektoren für unerwünschte Lichtmoden ist dann so gering, dass diese auch bei der maximal zulässigen Pumpleistung nicht zu Laserschwingungen fähig sind. Die Unterdrückung von Laserschwingungen unerwünschter Lichtmoden ist praktisch vollständig. Nur der erwünschte Lichtmode kann schwingen, selbst bei hohen Pumpleistungen.

In einer weiteren bevorzugten Ausführungsform der Erfindung beträgt gegenseitige Verstimmung $\Delta\lambda_B$ der beiden Endreflektoren im wesentlichen $\Delta\lambda_B = (\Delta\lambda_{biref}{}^{FBG1} + \Delta\lambda_{biref}{}^{FBG2})/2$, wobei $\Delta\lambda_{biref}{}^{FBGi}$ der Wellenlängenabstand zwischen Reflexionsmaxima des i-ten Endreflektors für die zwei zueinander orthogonalen Lichtmoden der Laserfaser ist. Dadurch ist die Überlappung der Reflexionspeaks der beiden Endreflektoren für den erwünschten Lichtmode maximal. Entsprechend sind die Resonatorverluste für den erwünschten Lichtmode minimal, so dass die Lasereffizienz gross ist.

In einer weiteren vorteilhaften Ausführungsform sind die beiden Endreflektoren gleichartig hergestellte gegeneinander verstimmte oder verstimmbare Faser-Bragg-Gitter. Dadurch wird die Herstellbarkeit des Faserlasers verbessert. Und die Stabilität des vom Laser emittierten Lichtes bei Störeinflüssen wie Temperatur- oder Druckschwankungen ist verbessert.

In einer besonders bevorzugten Ausführungsform wirkt die ganze Laserfaser als laserverstärkende Faser, so dass nur relativ geringe Dotierungen notwendig sind. Weiter ist die Laserfaser eine polarisationserhaltende Faser, wodurch Modenkopplungen ausserhalb des Mittels zur Modenkopplung vermieden werden und der Faserlaser unempfindlich gegen Störeinflüsse wie Verformungen der Laserfaser wird. Zudem sind die beiden Endreflektoren gleichartige, holographisch in gegenüberliegende Enden der Laserfaser eingeschriebene Faser-Bragg-Gitter, die sich durch ihre gegenseitige Verstimmung und durch unterschiedliche (maximale) Reflexionsvermögen unterscheiden. Das ermöglicht eine deutlich verbesserte Herstellbarkeit und Stabilität des Faserlasers.

In einer weiteren vorteilhaften Ausführungsform ist das Mittel zur Modenkopplung in der Mitte der optischen Weglänge zwischen den beiden Endreflektoren angeordnet, so dass Störeinflüsse, wie sie beispielsweise durch eine Polarisation des Pumplichtes hervorgerufen werden können, die Stabilität des vom Laser emittierten Lichtes kaum beeinträchtigen können.

In weiteren bevorzugten Ausführungsformen sind die am einfachsten und stabilsten nutzbaren Lasermoden und dazugehörige simple und effiziente Mittel zur Modenkopplung gewählt.

In einer besonders vorteilhaften Ausführungsform ist nur genau ein Longitudinalmode in dem Faserlaser zu Laserschwingungen fähig. Dadurch ergibt sich eine sehr schmale Linienbreite des Faserlasers, und ein Single-Mode-Laser wird realisiert.

Weitere bevorzugte Ausführungsformen und Vorteile gehen aus den abhängigen Patentansprüchen und den Figuren hervor.

Kurze Beschreibung der Zeichnungen

Im folgenden wird der Erfindungsgegenstand anhand der beiliegenden Zeichnungen näher erläutert. Es zeigen:

Fig. 1    eine schematische Darstellung eines erfindungsgemässen Faserlasers, der mit Polarisationsmoden arbeitet;

Fig. 2    eine schematische Darstellung eines erfindungsgemässen Faserlasers, der mit Transversalmoden arbeitet;

Fig. 3a, 3b   eine schematische Darstellung der Reflexionspeaks der Endreflektoren eines erfindungsgemässen Faserlasers mit Polarisationsmoden;

Fig. 4a, 4b   eine schematische Darstellung der Reflexionspeaks der Endreflektoren eines Faserlasers mit linearpolarisierten Lichtzuständen für

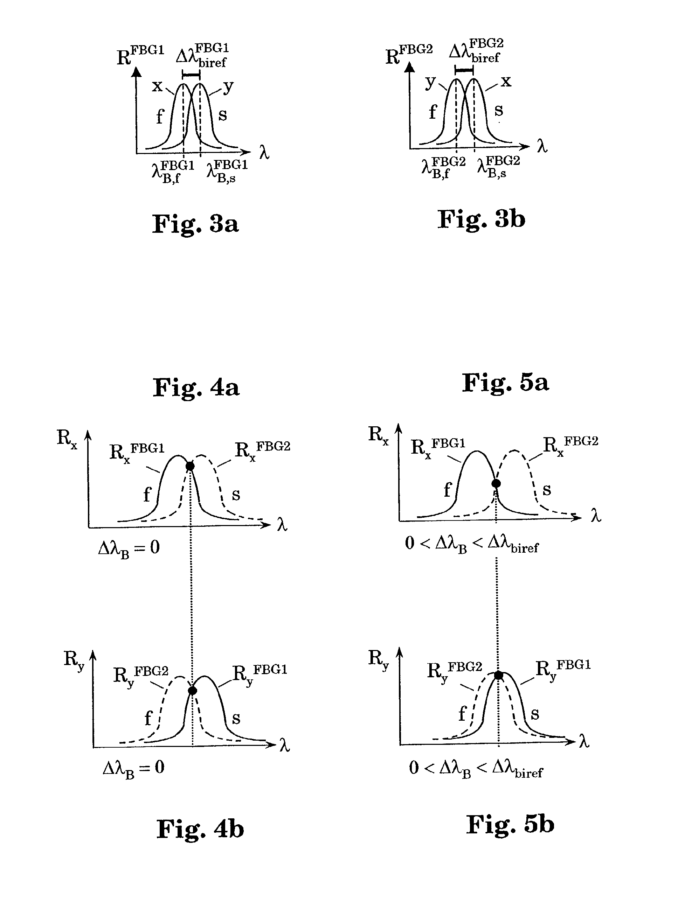

Fig. 4a:    unverstimmte Endreflektoren ($\Delta\lambda_B=0$) und x- Polarisation,
Fig. 4b:    unverstimmte Endreflektoren ($\Delta\lambda_B=0$) und y- Polarisation,

Fig. 5a, 5b   eine schematische Darstellung der Reflexionspeaks der Endreflektoren eines erfindungsgemässen Faserlasers mit linearpolarisierten Lichtzuständen für

Fig. 5a:    verstimmte Endreflektoren ($0<\Delta\lambda_B<\Delta\lambda_{biref}$) und x- Polarisation,
Fig. 5b:    verstimmte Endreflektoren ($0<\Delta\lambda_B<\Delta\lambda_{biref}$) und y- Polarisation,

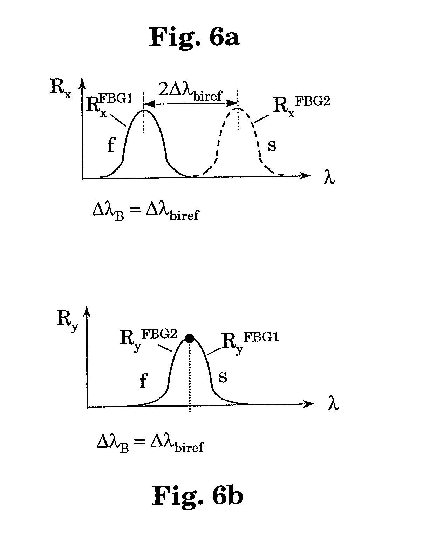

Fig. 6a, 6b   eine schematische Darstellung der Reflexionspeaks der Endreflektoren eines erfindungsgemässen Faserlasers mit linearpolarisierten Lichtzuständen für

Fig. 6a:    verstimmte Endreflektoren ($\Delta\lambda_B=\Delta\lambda_{biref}$) und x- Polarisation,
Fig. 6b:    verstimmte Endreflektoren ($\Delta\lambda_B=\Delta\lambda_{biref}$) und y- Polarisation,

Die in den Zeichnungen verwendeten Bezugszeichen und deren Bedeutung sind in der Bezugszeichenliste zusammengefasst aufgelistet. Grundsätzlich sind in den Figuren gleiche oder zumindest gleichwirkende Teile mit gleichen Bezugszeichen versehen.

Wege zur Ausführung der Erfindung

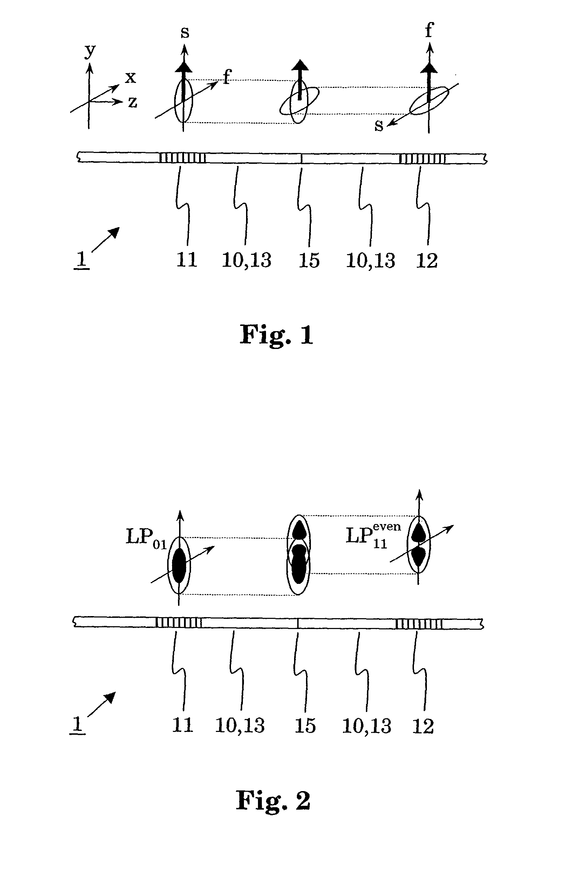

Fig. 1 zeigt schematisch einen erfindungsgemässen Faserlaser 1, der linear polarisiertes Licht, also einen Polarisationsmode, erzeugt. Der Faserlaser 1 ist hergestellt aus einer polarisationserhaltenden optischen Faser, die somit als Laserfaser 10 dient. Es wurde hier eine Faser mit elliptischem Kernquerschnitt eingesetzt. In die Laserfaser 10 ist ein erstes Faser-Bragg-Gitter (FBG) und ein zweites FBG holographisch eingeschrieben. Das erste FBG stellt einen ersten Endreflektor 11 des Faserlasers 1 dar, und das zweite FBG einen zweiten Endreflektor 12. Die beiden FBG 11,12 sind wegen ihres elliptischen Kernquerschnittes doppelbrechend bezüglich linearer Polarisation und bis auf eine gegenseitige Verstimmung gleichartig ausgebildet. In der Mitte zwischen den beiden FBG 11,12 ist die Laserfaser 10 auseinandergeschnitten und um 90° verdreht wieder zusammengespleisst. Dadurch befindet sich in der Mitte zwischen den beiden FBG 11,12 ein 90°-Faserspleiss 15. Dieser dient als Mittel zur Modenkopplung 15. Somit sind auch die Achsen der FBG 11,12 um 90° gegeneinander verdreht. Die Laserfaser ist $Er^{3+}$-dotiert und dient somit als laserverstärkende Faser 13.

Die Raumachsen x,y,z sind in Fig. 1 skizziert, wobei z entlang der Faserachse ausgerichtet ist. In Fig. 1 oberhalb des Faserlasers 1 ist die Orientierung des elliptischen Faserkerns mitsamt den Faserachsen s,f angedeutet. Für das erste FBG 11 liegt die langsame (lange) Achse s parallel zu y. Und die schnelle (kurze) Achse f liegt entlang x. Für das zweite FBG 12 sind die Verhältnisse wegen des 90°-Spleisses 15 umgekehrt: Die langsame (lange) Achse s ist entlang x ausgerichtet, während die schnelle (kurze) Achse f entlang y verläuft. Für die Achsen der Doppelbrechung der auf jeder Seite des 90°-Faserspleisses 15 angeordneten Laserfaser 10 gilt selbstverständlich das gleiche. Diese Verhältnisse sind in Fig. 1 skizziert. Der dicke Pfeil deutet die Polarisationsrichtung eines in dem Faserlaser 1 zu Laserschwingungen fähigen Lichtmodes (stehende Welle) an. Zwischen dem ersten FBG 11 und dem Mittel zur Modenkopplung 15 ist die Polarisationsachse des Lichtmodes entlang der Faserachse s ausgerichtet. Zwischen dem zweiten FBG 12 und dem Mittel zur Modenkopplung 15 ist die Polarisationsachse des Lichtmodes entlang der Faserachse f ausgerichtet.

Fig. 2 zeigt schematisch und analog zu Fig. 1 einen erfindungsgemässen Faserlaser 1, der Licht einer bestimmten transversalen Raumstruktur, also einen Transversalmode, erzeugt. Der Aufbau des Faserlasers 1 ist identisch mit dem Faserlaser 1 aus Fig. 1, ausser dass das Mittel zur Modenkopplung 15 hier ein seitliche versetzter Faserspleiss 15 ist. In Fig. 2 oberhalb des Faserlasers 1 ist die Orientierung des elliptischen Faserkerns und sind die im Faserlaser 1 zu Laserschwingungen fähigen Transversalmoden $LP_{01}$ und $LP_{11}^{even}$ angedeutet. Zwischen dem ersten FBG 11 und dem Mittel zur Modenkopplung 15 ist der Transversalmode $LP_{01}$ schwingungsfähig. Zwischen dem zweiten FBG 12 und dem Mittel zur Modenkopplung 15 ist der Transversalmode $LP_{11}^{even}$ schwingungsfähig.

Im folgenden wird die Erfindung vorwiegend anhand eines Faserlasers 1 erläutert, der mit Polarisationsmoden arbeitet, ähnlich dem in Fig. 1 skizziertem Faserlaser 1. Dem Fachmann ist es ohne weiteres möglich, die Erläuterungen sowohl auf Faserlaser 1 mit Transversalmoden (vergleiche Fig. 2) und auf Faserlaser 1 mit linearpolarisierten Transversalmoden zu übertragen (keine Abbildung).

In Fig. 3a und 3b sind die Reflexionsvermögen $R^{FBG1}, R^{FBG2}$ der Endreflektoren 11,12 schematisch dargestellt. Fig. 3a zeigt das Reflexionsvermögen $R^{FBG1}$ des ersten FBG 11. Aufgrund der Doppelbrechung des FBG 11 gibt es für Licht, das entlang der schnellen Achse f polarisiert ist, einen Reflexionspeak (Bragg-Peak) bei einer kürzeren Wellenlänge $\lambda_{B,f}^{FBG1}$ als für Licht, das entlang der langsamen Achse s polarisiert ist. Der Wellenlängenabstand $\Delta\lambda_{biref}$ zwischen den beiden Reflexions-Peak-Wellenlängen (Bragg-Wellenlängen) beträgt

$$\Delta\lambda_{biref}^{FBG1} = \lambda_{B,s}^{FBG1} - \lambda_{B,f}^{FBG1}.$$

Für das zweite FBG 12 sind die Verhältnisse in Fig. 3b dargestellt. Wie schon in Fig. 1 diskutiert ist für das zweite FBG 12 die Zuordnung der Faserachsen s,f zu den Raumachsen x,y gerade umgekehrt wie für das erste FBG 11. Da in dem vorliegenden Ausführungsbeispiel die beiden FBG 11,12 bis auf eine gegenseitige Verstimmung identisch ausgebildet sind, liegen die Reflexionspeaks zwar nicht bei denselben Wellenlängen ($\lambda_{B,f}^{FBG1} \neq \lambda_{B,f}^{FBG2}$ und $\lambda_{B,s}^{FBG1} \neq \lambda_{B,s}^{FBG2}$), aber die Reflexionspeaks für das zweite FBG 12 und somit die Bragg-Wellenlängen sind um dasselbe

$$\Delta\lambda_{biref}^{FBG2} = \lambda_{B,s}^{FBG2} - \lambda_{B,f}^{FBG2} = \Delta\lambda_{biref}^{FBG1}.$$

voneinander beabstandet. Im allgemeinen können $\Delta\lambda_{biref}^{FBG1}$ und $\Delta\lambda_{biref}^{FBG2}$ selbstverständlich voneinander verschieden sein.

Anhand von Fig. 4a und b, Fig. 5a und b und Fig. 6a und b wird die gegenseitige Verstimmung der FBG 11,12 und die Unterdrückung der Laserschwingung auf einer unerwünschten Polarisation erläutert. In den Figuren ist weiterhin der Fall $\Delta\lambda_{biref}^{FBG2} = \Delta\lambda_{biref}^{FBG1} = \Delta\lambda_{biref}$ dargestellt.

Die Fig. 4a und 4b zeigen zunächst den nicht erfindungsgemässen Fall, dass die beiden FBG 11,12 dieselbe Bragg-Wellenlänge aufweisen, also nicht gegeneinander verstimmt sind. Der Unterschied in der Bragg-Wellenlänge, $\Delta\lambda_B$, beträgt somit

$$\Delta\lambda_B = \lambda_{B,f}^{FBG2} - \lambda_{B,f}^{FBG1} = \lambda_{B,s}^{FBG2} - \lambda_{B,s}^{FBG1} = 0.$$

Fig. 4a zeigt das Reflexionsvermögen der beiden FBG 11,12 für entlang der x-Achse linearpolarisiertes Licht. Fig. 4b zeigt das Reflexionsvermögen der beiden FBG 11,12 für entlang der y-Achse linearpolarisiertes Licht. Bei der durch die dicken Punkte und die gepunktete Linie gekennzeichneten Wellenlänge ist das Produkt der Reflexionsvermögen der beiden FBG 11,12 maximal, und somit sind Resonatorverluste minimal, so dass der Laser auf dieser Wellenlänge schwingt. Aufgrund der Gleichartigkeit der FBG 11,12 und der Gleichartigkeit der Reflexionspeaks für die beiden Polarisationen x,y schwingt der Faserlaser 1 für x- und für y-Polarisation auf derselben Wellenlänge und mit derselben Intensität. Somit wird ein Faserlaser 1 mit Endreflektoren 11,12, die Reflexionsvermögen aufweisen, wie sie in Fig. 4a und b dargestellt sind, im allgemeinen stets auf zwei Polarisationsmoden s,f auf jeder Seite des Mittels zur Modenkopplung 15 schwingen.

Fig. 5a und 5b zeigen den Fall, dass die Braggwellenlänge des ersten FBG 11 von der Braggwellenlänge des zweiten FBG 12 verschieden ist, also

$$\Delta\lambda_B = abs(\lambda_{B,f}^{FBG2} - \lambda_{B,f}^{FBG1}) = abs(\lambda_{B,s}^{FBG2} - \lambda_{B,s}^{FBG1}) \neq 0.$$

Die Bragg-Wellenlänge $\lambda_B$ eines doppelbrechenden FBG ist hier definiert als eine mittlere Bragg-Wellenlänge definiert:

$$\lambda_B^{FBGi} = (\lambda_{B,s}^{FBGi} + \lambda_{B,f}^{FBGi}) / 2.$$

Es ist ein Wert für $\Delta\lambda_B$ gewählt, der kleiner ist als $\Delta\lambda_{biref}$. Die Reflexionspeaks der beiden FBG 11,12 für x-polarisiertes Licht (Fig. 5a) sind in diesem Fall weiter beabstanded als die Reflexionspeaks der beiden FBG 11,12 für y-polarisiertes Licht (Fig. 5b).

Die Wellenlängen, bei denen der Faserlaser 1 minimale Resonatorverluste hat, sind aber immer noch gleich für x- und y-Polarisation (gestrichelte Linie, dicke Punkte). Aber die Resonatorverluste sind für x-polarisiertes Licht viel grösser als für y-polarisiertes Licht. Denn für für x-polarisiertes Licht liegt die Wellenlänge minimaler Resonatorverluste in der Flanke der Reflexionspeaks, während für y-polarisiertes Licht die Wellenlänge minimaler Resonatorverluste nahe dem Maximum der Reflexionspeaks liegt. Die Laserschwelle ist somit für y-polarisiertes Licht niedriger als die Laserschwelle für x-polarisiertes Licht. Bei Pumpleistungen, die zwischen diesen beiden Laserschwellen liegen, wird somit der Faserlaser nur auf y-polarisiertem Licht schwingen, so dass zwischen dem ersten FBG 11 und dem Mittel zur Modenkopplung 15 einzig der entlang der Achse s linearpolarisierte Lichtmode s und zwischen dem zweiten FBG 12 und dem Mittel zur Modenkopplung 15 einzig der entlang der Achse f linearpolarisierte Lichtmode f zu Laserschwingungen fähig ist. Laserschwingungen von x-polarisiertem Licht sind hingegen unterdrückt.

Fig. 6a und 6b zeigen den Fall, dass die Verstimmung $\Delta\lambda_B$ der FBG 11,12 als $\Delta\lambda_B = \Delta\lambda_{biref}^{FBG1} = \Delta\lambda_{biref}^{FBG2}$ gewählt ist. In diesem Fall fallen die Bragg-Peaks der beiden FBG 11,12 für y-polarisiertes Licht zusammen. Dadurch sind die Resonatorverluste für y-polarisiertes Licht minimal (Fig. 6b, gestrichelte Linie, dicker Punkt). In dem allgemeinen Fall, dass $\Delta\lambda_{biref}^{FBG1} \neq \Delta\lambda_{bi\text{-}ref}^{FBG2}$ ist, fallen die Bragg-Peaks zusammen, wenn

$$\Delta\lambda_B = (\Delta\lambda_{biref}^{FBG1} + \Delta\lambda_{biref}^{FBG2}) / 2$$

gilt. Für x-polarisiertes Licht hingegen sind die beiden Reflexionspeaks weit beabstandet, nämlich um $2\cdot\Delta\lambda_{biref}$ oder allgemein um $\Delta\lambda_{biref}^{FBG1} + \Delta\lambda_{biref}^{FBG2}$. Dadurch gibt es in dem in Fig. 6a dargestellten Fall keine Überlappung der Peaks mehr, so dass auch bei der maximal zulässigen Pumpleistung keine Lasersschwingungen in x-Polarisation mehr möglich sind. Der unerwünschte Polarisationsmode ist somit vollständig unterdrückt. Je nach Breite der Reflexionspeaks und Betrag von $\Delta\lambda_{biref}$ ist der unerwünschte Polarisationsmode auch schon bei kleineren Verstimmungen oder erst bei Verstimmungen von mehr als $\Delta\lambda_{biref}^{FBG1} + \Delta\lambda_{biref}^{FBG2}$ vollständig unterdrückt. Wenn der unerwünschte Lichtmode unterdrückt ist, liegt also ein Faserlaser vor, der auf der dem ersten Endreflektor 11 zugewandten Seite des Mittels zur Modenkopplung 15 nur auf dem durch seine lineare Polarisation entlang der Achse s definiterten Lichtmode schwingt und der auf der dem zweiten Endreflektor 12 zugewandten Seite des Mittels zur Modenkopplung 15 nur auf dem durch seine lineare Polarisation entlang der Achse f definiterten Lichtmode schwingt.

Typische Masse und Grössenordnungen für eine beispielhafte Ausführungsform eines erfindungsgemässen Faserlasers 1, bei dem die Laserfaser 10 mit der laserverstärkenden Faser 13 identisch ist, sind beispielsweise:

- Laserschwelle: unter 10 mW Pumpleistung
- Länge der Laserfaser 10: 40 cm
- Länge der Hauptachsen des Kerns der Laserfaser 10: 3 $\mu$m und 15 $\mu$m
- $Er^{3+}$-Konzentration der laserverstärkenden Faser 13: 5000 ppm (Gewicht)
- 90°-Faserspleiss auf ±5°, besser noch ±2° genau justiert
- Unterschied der Brechungsindices von Kern und Ummantelung der Laserfaser: 0.011
- Doppelbrechung der Laserfaser 10 und der FBG 11,12: $5.7 \times 10^{-5}$
- Bragg-Wellenlänge der FBG 11,12: $\lambda_B \approx 1535$ nm
- Unterschied der Bragg-Wellenlängen der FBG 11,12 für s- und f-Polarisation: $\Delta\lambda_{biref}$ = 60 pm

Die weiter oben und im folgenden aufgeführten alternativen oder zusätzlichen Merkmale sind optional und untereinander sowie mit den in der Beschreibung dargestellten Ausführungsbeispielen beliebig kombinierbar.

Die Erfindung kann nicht nur mit Lichtmoden, die aufgrund ihrer linearen Polarisation zueinander orthogonal sind, durchgeführt werden. Wie im Zusammenhang mit Fig. 2 bereits erwähnt, ist es auch möglich, mit Lichtmoden zu arbeiten, die aufgrund ihrer transversalen Raumstruktur zueinander orthogonal sind. Der Begriff "orthogonal" ist also nicht einfach als rechtwinklig im Sinne von 90° aufzufassen, sondern wird im mathematischen Sinne gebraucht: für zueinander orthogonale Basisfunktionen oder Lichtmoden, aus welchen sich durch Linearkombination ein beliebiger Lichtzustand der entsprechenden Art, beispielsweise ein Lichtzustand mit einer beliebigen transversalen Raumstruktur,

darstellen lässt. Die LP$_{mn}$-Transversalmoden können darum verwendet werden. Sie sind zwar nur eine (gute) Approximation zur Beschreibung der transversalen Raumstruktur, aber sie sind auch in guter Näherung zueinander orthogonal. Es können beispielsweise die transversalen Raummoden LP$_{01}$ und LP$_{11}$$^{even}$ anstelle der oben diskutierten linearpolarisierten Moden eingesetzt werden. Statt eines 90°-verdrehten Faserspleisses 15 dient hier vorzugsweise ein seitlich versetzter Faserspleiss 15 als Mittel zur Modenkopplung 15. Durch das Mittel zur Modenkopplung 15 wird Licht im LP$_{01}$-Mode überführt in Licht im LP$_{11}$$^{even}$-Mode. Ein derartiger Laser emittiert an einem der Endreflektoren 11,12 Licht im LP$_{01}$-Mode und an dem anderen Endreflektor 11,12 Licht im LP$_{11}$$^{even}$-Mode

Der Faserlaser 1 kann auch mit zueinander orthogonal linearpolarisierten orthogonalen Transversalmoden, beispielsweise LP$_{01,s}$ und LP$_{11,f}$$^{even}$ oder LP$_{01,f}$ und LP$_{11,s}$$^{even}$ betrieben werden, die also sowohl aufgrund ihres Polarisationszustandes als auch aufgrund ihrer transversalen räumlichen Struktur zueinander orthogonal sind. Als Mittel zur Modenkopplung dient dann vorzugsweise ein seitlich versetzter 90°-Faserspleiss.

Die Mittel zur Modenkopplung 15 sind vorteilhaft derart ausgebildet, dass die Kopplung der beiden orthogonalen Lichtmoden der Laserfaser 10 möglichst vollständig, grösser als 60%, besser grösser als 80% ist.

Wenn der Faserlaser 1 mit orthogonalen Moden der linearen Polarisation betrieben wird, weisen diese vorzugsweise dieselbe transversale Raumstruktur auf; vorzugsweise schwingen beide in dem transversalen Grundmode LP$_{01}$. Wird der Faserlaser 1 mit zueinander orthogonalen transversalen Raummoden betrieben, beispielsweise mit LP$_{01}$ und LP$_{11}$$^{even}$, so werden vorzugsweise zwei orthogonale Raummoden mit derselben linearen Polarisation gewählt.

Statt einer Laserfaser 10 mit elliptischem Kernquerschnitt können auch andere, vorzugsweise polarisationerhaltende, Fasern, wie beispielsweise "Panda"-Fasern, "bow-tie"-Fasern oder Fasern mit elliptischer innerer Ummantelung, eingesetzt werden. Die Laserfaser 10 kann aus mehreren Segmenten verschiedenartiger Faser zusammengesetzt sein, beispielsweise aus dotierten und undotierten Fasern und/oder aus Fasersegmenten mit verschiedenartigem Kern und/oder verschiedenartiger Ummantelung. Als laserverstärkende Faser 13 kann ein beliebiger Teil der Laserfaser 10 dienen, vorteilhaft sind laserverstärkende Faser 13 und Laserfaser 10 identisch. Statt einer Er$^{3+}$-Dotierung kann auch eine Nd$^{3+}$-Dotierung oder ein anderes Mittel zur Laserverstärkung eingesetzt werden.

Die Endreflektoren 11,12 sind im Falle von Polarisations- und/oder Transversalmoden vorzugsweise als Faser-Bragg-Gitter ausgebildet. Diese FBG 11,12 sind vorzugsweise in doppelbrechende Fasern, beispielsweise in Fasern mit elliptischem Kern, "bowtie"-Fasern oder "Panda"-Fasern, und insbesondere bevorzugt in die Laserfaser 10 eingebracht. Es ist aber auch möglich, nicht intrinsisch doppelbrechende Fasern dafür zu benutzen, wobei dann eine Doppelbrechung des FBG vorzugsweise durch den Gitterschreib-Vorgang oder durch eine zusätzliche Vorrichtung erzeugt wird. Die zusätzliche Vorrichtung dient dann zur Erzeugung einer permanenten mechanischen Spannung in dem FBG. Vorteilhaft werden eine geeignete Verstimmung $\Delta\lambda_B$ und geeignete $\Delta\lambda_{biref}$ bei der Herstellung der Endreflektoren 11,12 eingebracht. Die FBG 11,12 sind vorteilhaft holographisch erzeugt. Sie können aber auch anders hergestellt sein, beispielsweise durch Ätzen oder durch ein mechanisches Verfahren. Wenn mindestens einer der Endreflektoren 11,12 nicht in die Laserfaser 10 eingebracht ist, muss dieser Endreflektor 11,12 optisch an die Laserfaser 10 angekoppelt, beispielsweise angespleisst sein. An dieser Kopplungs- oder Spleiss-Stelle kann dann vorteilhaft das Mittel zur Modenkopplung 15 (90°-rotierter und/oder seitlich versetzter Faserspleiss) realisiert werden. Es ist auch denkbar, dass einer der Endreflektoren 11,12 als Mittel zur Modenkopplung 15 wirkt.

Die Achsen der Doppelbrechung der Endreflektoren 11,12 sind vorteilhaft derart orientiert, dass sie die gleiche Orientierung aufweisen wie die Achsen der Doppelbrechung desjenigen Segmentes der Laserfaser 10, das zwischen dem jeweiligen Endreflektor und dem Mittel zur Modenkopplung 15 angeordnet ist. In dem Fall, dass das Mittel zur Modenkopplung 15 unmittelbar an einem der Endreflektoren angeordnet ist, so dass dazwischen kein Teil der Laserfaser 10 angeordnet ist, ist die Orientierung der Achsen der Doppelbrechung des entsprechenden Endreflektors durch das Mittel zur Modenkopplung 15 vorgegeben.

Sehr vorteilhaft ist es, wenn beide FBG 11,12 doppelbrechend sind, es ist aber ausreichend, wenn einer der Endreflektoren 11,12 doppelbrechend ist. Die Doppelbrechung der Endreflektoren 11,12 kann auch als modenselektives Reflexionsvermögen der Endreflektoren 11,12 bezeichnet werden, weil das Reflexionsvermögen eines doppelbrechenden FBG von dem Lichtzustand (lineare Polarisation, transversale Raumstruktur) abhängt. Statt FBG 11,12 können auch andersartige wellenlängenselektiv reflektierende Endreflektoren 11,12 benutzt werden, beispielsweise sind dielektrische Spiegel, Spiegel mit einem Farbfilter oder auch photonische Kristalle denkbar. Es können auch zwei verschiedenartig ausgebildete FBG 11,12 oder eine Kombination von einem FBG mit einem andersartigen Endreflektor benutzt werden.

Wellenlängenselektives Reflexionsvermögen der Endreflektoren 11,12 bedeutet hier, dass die Reflexionsspektren der Endreflektoren 11,12 einen oder mehrere Peaks (Maxima) abhängig von der Wellenlänge aufweisen. Oder: Dass nicht einer der Endreflektoren 11,12 eine (nahezu) konstantes Reflexionsvermögen in dem Wellenlängen-Bereich aufweist, in welchem der andere Endreflektor 12,11 ein hohes Reflexionsvermögen aufweist oder einen Peak im Reflexionsspekrum hat. Man kann auch von einem schmalbandigen spektralen Reflexionsvermögen der Endreflektoren 11,12 sprechen. Mehrere Reflexions-Peaks der Endreflektoren bei verschiedenen Wellenlängen sind auch mög-

EP 1 359 646 A1

lich.

Eine gegenseitige Verstimmung der Endreflektoren 11,12 bedeutet, dass der Mittelwert der Zentral-Wellenlängen der Reflexionspeaks des ersten Endreflektors 11 für zwei aufgrund ihrer linearen Polarisation und/oder ihrer transversalen Raumstruktur zueinander orthogonalen Lichtmoden (s,f; $LP_{01}$,$LP_{11}^{even}$) verschieden ist von dem Mittelwert der Zentral-Wellenlängen der Reflexionspeaks des zweiten Endreflektors 12 für die beiden Lichtmoden. Falls einer der Endreflektoren 11,12 nicht doppelbrechend ist, ist der Mittelwert durch die Zentral-Wellenlänge des einen Reflexionspeaks zu ersetzen. Bei doppelbrechenden Faser-Bragg-Gittern 11,12 gilt:

$$\Delta\lambda_B = (\lambda_{B,f}^{FBG1} + \lambda_{B,s}^{FBG1})/2 - (\lambda_{B,f}^{FBG2} + \lambda_{B,s}^{FBG2})/2.$$

Für nicht-doppelbrechende FBG ist $\lambda_B = \lambda_{B,f} = \lambda_{B,s}$. Es versteht sich, dass in dem Fall, dass mindestens einer der Endreflektoren 11,12 mehrere Reflexionspeaks aufweist, stets ein solcher Reflexionspeak gemeint ist, der mindestens eine der Wellenlängen enthält, auf denen der Faserlaser 1 schwingt. Eine gegenseitige Verstimmung der Endreflektoren 11,12 liegt auch dann vor, wenn die Mittelwerte der Zentral-Wellenlängen der Reflexionspeaks für die beiden Endreflektoren 11,12 zusammenfallen, aber aufgrund unterschiedlicher Peak-Breiten für die zueinander orthogonalen Lichtmoden mindestens eines der Endreflektoren 11,12 nur ein Lichtmode zu Laserschwingungen fähig ist.

Die beiden Wellenlängenabstände $\Delta\lambda_B$ und $\Delta\lambda_{biref}$ wurden so definiert, dass sie niemals ein negatives Vorzeichen haben. Bei der Verstimmung $\Delta\lambda_B$ kann ausgewählt werden, welcher der Endreflektoren 11,12 zu grösseren oder zu kleineren Wellenlängen verstimmt wird, je nachdem, welcher Lichtmode der zu unterdrückende Lichtmode ist.

Es ist möglich, $\Delta\lambda_B$ und/oder $\Delta\lambda_{biref}$ mittels eines Verstimmungsmittels veränderlich einstellbar zu machen und/oder zu stabilisieren. Dazu kann beispielsweise ein einstellbarer, auf mindestens einen der Endreflektoren 11,12 wirkender, mechanischer Stress (Zug- oder Druckkraft) durch das Verstimmungsmittel ausgeübt werden. Und/oder mindestens einer der Endreflektoren 11,12 wird, beispielsweise durch einen Röhrenofen auf einer wählbaren Temperatur gehalten.

Es ist vorteilhaft, den Faserlaser 1 derart zu dimensionieren, dass nur ein einziger Longitudinalmode im Faserlaser 1 schwingungsfähig ist. Dies kann beispielsweise dadurch erreicht werden, dass eine entsprechend kurze Resonatorlänge des Faserlasers 1 gewählt wird. Alternativ oder ergänzend kann auch die spektrale Breite des Reflexionspeaks (für den erwünschten Lichtmode) mindestens eines Endreflektors 11,12 so klein gewählt werden, dass nur ein Longitudinalmode im Faserlaser 1 schwingungsfähig ist. So kann ein Single-Mode-Laser realisiert werden.

Eine vorteilhafte Ausführungsform weist für die beiden Endreflektoren 11,12 Reflexionsvermögen von nahe 100% beziehungsweise 90% bis 98% (für die bevorzugte Licht-Auskoppelseite) auf.

Ein erfindungsgemässer Faserlaser kann für verschiedenste Zwecke eingesetzt werden, beispielsweise in der optischen Telekommunikation, der chemischen Analytik, der Umweltanalytik oder der optischen Sensorik.

Die genannten Merkmale können gemeinsam oder auch einzeln oder in beliebiger Kombination vorteilhaft sein.

Bezugszeichenliste

| | |
|---|---|
| 1 | Faserlaser |
| 10 | Laserfaser |
| 11 | erster Endreflektor; erstes FBG |
| 12 | zweiter Endreflektor; zweites FBG |
| 13 | laserverstärkende Faser |
| 15 | Mittel zur Modenkopplung; 90°-Faserspleiss; seitlich versetzter Faserspleiss |
| f | schnelle Achse (fast axis) |
| FBG | Faser-Bragg-Gitter |
| $LP_{01}$ | transversaler Raummode nullter Ordnung (Grundmode) |
| $LP_{11}^{even}$ | transversaler Raummode erster Ordnung |
| R | Reflexionsvermögen eines Endreflektors |
| $R_x$ | Reflexionsvermögen eines Endreflektors für x-Polarisation |
| Ry | Reflexionsvermögen eines Endreflektors für y-Polarisation |
| s | langsame Achse (slow axis) |
| x | Koordinatenachse; Achse einer linearen Polarisation |
| y | Koordinatenachse; Achse einer linearen Polarisation |
| z | Koordinatenachse; Faserachse |
| λ | Wellenlänge |
| $\lambda_B$ | Bragg-Wellenlänge; Wellenlänge eines Reflexionmaximums eines Endreflektors |
| $\lambda_{B,s}$ | Bragg-Wellenlänge für Licht mit linearer Polarisation parallel zu s |

$\lambda_{B,f}$     Bragg-Wellenlänge für Licht mit linearer Polarisation parallel zu f

$\Delta\lambda_B$     Differenz der Bragg-Wellenlängen der beiden FBG; gegenseitige Verstimmung der Endreflektoren

$\Delta\lambda_{biref}$     Wellenlängendifferenz der Reflexionmaxima (Bragg-Wellenlängen) eines FBG für die zwei orthogonalen Lichtzustände x,y

**Patentansprüche**

1. Faserlaser (1) umfassend

(a) eine Laserfaser (10), die zumindest teilweise als laserverstärkende Faser (13) ausgebildet ist,
(b) einen ersten Endreflektor (11) und
(c) einen zweiten Endreflektor (12), wobei
(d) der erste Endreflektor (11) gegenüber dem zweiten Endreflektor (12) verstimmt ist,
**dadurch gekennzeichnet**,
(e) dass der erste Endreflektor (11) für zwei zueinander orthogonale Lichtmoden (s,f; $LP_{01}$,$LP_{11}^{even}$) der Laserfaser (10), die aufgrund ihres Zustandes der linearen Polarisation (s,f) und/oder ihrer transversalen Raumstruktur ($LP_{01}$,$LP_{11}^{even}$) zueinander orthogonal sind, doppelbrechend ist,
(f) dass ein Mittel zur Modenkopplung (15) zwischen den beiden Endreflektoren (11,12) angeordnet ist, und
(g) dass durch das Mittel zur Modenkopplung (15) die zwei zueinander orthogonalen Lichtmoden (s,f; $LP_{01}$, $LP_{11}^{even}$) der Laserfaser (10) miteinander koppelbar sind.

2. Faserlaser (1) gemäss Anspruch 1, **dadurch gekennzeichnet, dass**
die gegenseitige Verstimmung der Endreflektoren (11,12) und die Doppelbrechung des ersten Endreflektors (11) derart gewählt sind, dass auf jeder Seite des Mittels zur Modenkopplung (15) genau ein durch seinen Zustand der linearen Polarisation (s,f) und/oder seine transversale Raumstruktur ($LP_{01}$,$LP_{11}^{even}$) definierter Lichtmode (s,f; $LP_{01}$,$LP_{11}^{even}$) zu Laserschwingungen fähig ist.

3. Faserlaser (1) nach einem der vorhergehenden Ansprüche, **dadurch gekennzeichnet, dass**
die gegenseitige Verstimmung $\Delta\lambda_B$ der beiden Endreflektoren (11,12) im wesentlichen

$$\Delta\lambda_B = (\Delta\lambda_{biref}^{FBG1} + \Delta\lambda_{biref}^{FBG2}) / 2$$

beträgt, wobei
$\Delta\lambda_{biref}^{FBG1}$ der Wellenlängenabstand zwischen Reflexionsmaxima des ersten Endreflektors (11) für die zwei zueinander orthogonalen Lichtmoden (s,f; $LP_{01}$,$LP_{11}^{even}$) der Laserfaser (10) ist, und
$\Delta\lambda_{biref}^{FBG2}$ der Wellenlängenabstand zwischen Reflexionsmaxima des zweiten Endreflektors (12) für die zwei zueinander orthogonalen Lichtmoden (s,f; $LP_{01}$,$LP_{11}^{even}$) der Laserfaser (10) ist.

4. Faserlaser (1) nach einem der vorhergehenden Ansprüche, **dadurch gekennzeichnet, dass**
mindestens einer der beiden Endreflektoren (11;12) ein in eine Faser holographisch eingeschriebenes Faser-Bragg-Gitter (11;12) ist.

5. Faserlaser (1) nach einem der vorhergehenden Ansprüche, **dadurch gekennzeichnet, dass**
die beiden Endreflektoren (11,12) für die zwei zueinander orthogonalen Lichtmoden (s,f; $LP_{01}$,$LP_{11}^{even}$) der Laserfaser (10) doppelbrechend sind.

6. Faserlaser (1) nach einem der vorhergehenden Ansprüche, **dadurch gekennzeichnet, dass**
die beiden Endreflektoren (11,12) gleichartig hergestellte gegeneinander verstimmte oder verstimmbare Faser-Bragg-Gitter (11,12) sind.

7. Faserlaser (1) nach einem der vorhergehenden Ansprüche, **dadurch gekennzeichnet**,

(a) dass die Laserfaser (10) mit der laserverstärkenden Faser (13) identisch ist, und/oder
(b) dass die Laserfaser (10) eine polarisationserhaltende Faser ist, und/oder
(c) dass die beiden Endreflektoren (11,12) gleichartige, holographisch in gegenüberliegende Enden der Laserfaser (10) eingeschriebene Faser-Bragg-Gitter (11,12) sind, die aufgrund ihrer gegenseitigen Verstimmung und aufgrund verschieden grosser Reflexionsvermögen voneinander verschieden sind.

8. Faserlaser (1) nach einem der vorhergehenden Ansprüche, **dadurch gekennzeichnet, dass** das Mittel zur Modenkopplung (15) in der Mitte der optischen Weglänge zwischen den beiden Endreflektoren (11,12) angeordnet ist.

9. Faserlaser (1) nach einem der vorhergehenden Ansprüche, **dadurch gekennzeichnet, dass** entweder

(a) die zwei zueinander orthogonalen Lichtmoden (s,f; $LP_{01}$,$LP_{11}^{even}$) der Laserfaser (10) zueinander orthogonale Moden der linearen Polarisation, beide im transversalen Grundmode $LP_{01}$, sind, und insbesondere das Mittel zur Modenkopplung (15) ein 90°-Faserspleiss ist, oder
(b) die zwei zueinander orthogonalen Lichtmoden (s,f; $LP_{01}$,$LP_{11}^{even}$) der Laserfaser (10) Transversalmoden $LP_{01}$ und $LP_{11}^{even}$, beide mit derselben linearen Polarisation, sind, und insbesondere das Mittel zur Modenkopplung (15) ein seitlich versetzter Faserspleiss ist, oder
(c) die zwei zueinander orthogonalen Lichtmoden (s,f; $LP_{01}$,$LP_{11}^{even}$) der Laserfaser (10) zueinander orthogonal linearpolarisierte orthogonale Transversalmoden $LP_{01,s}$ und $LP_{11,f}^{even}$ oder $LP_{01,f}$ und $LP_{11,s}^{even}$ sind, und insbesondere das Mittel zur Modenkopplung (15) ein seitlich versetzter 90°-Faserspleiss ist.

10. Faserlaser (1) nach einem der vorhergehenden Ansprüche, **dadurch gekennzeichnet, dass** genau ein Longitudinalmode in dem Faserlaser (1) zu Laserschwingungen fähig ist.

**Fig. 1**

**Fig. 2**

$R^{FBG1}$

$\Delta\lambda_{biref}^{FBG1}$

x — y

f — s

$\lambda$

$\lambda_{B,f}^{FBG1}$ $\lambda_{B,s}^{FBG1}$

**Fig. 3a**

$R^{FBG2}$

$\Delta\lambda_{biref}^{FBG2}$

y — x

f — s

$\lambda$

$\lambda_{B,f}^{FBG2}$ $\lambda_{B,s}^{FBG2}$

**Fig. 3b**

**Fig. 4a**

**Fig. 5a**

$R_x$

$R_x^{FBG1}$ $R_x^{FBG2}$

f — s

$\lambda$

$\Delta\lambda_B = 0$

$R_y$

$R_y^{FBG2}$ $R_y^{FBG1}$

f — s

$\lambda$

$\Delta\lambda_B = 0$

**Fig. 4b**

$R_x$

$R_x^{FBG1}$ $R_x^{FBG2}$

f — s

$\lambda$

$0 < \Delta\lambda_B < \Delta\lambda_{biref}$

$R_y$

$R_y^{FBG2}$ $R_y^{FBG1}$

f — s

$\lambda$

$0 < \Delta\lambda_B < \Delta\lambda_{biref}$

**Fig. 5b**

## Fig. 6a

$$\Delta\lambda_B = \Delta\lambda_{biref}$$

$$\Delta\lambda_B = \Delta\lambda_{biref}$$

## Fig. 6b

**EUROPÄISCHER RECHERCHENBERICHT**

Nummer der Anmeldung

EP 02 40 5363

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | ROCHAT E ET AL: "Fiber laser sensor for fluid pressure" TECHNICAL DIGEST. SUMMARIES OF PAPERS PRESENTED AT THE CONFERENCE ON LASERS AND ELECTRO-OPTICS. POSTCONFERENCE TECHNICAL DIGEST (IEEE CAT. NO.01CH37170), CLEO 2001. TECHNICAL DIGEST. SUMMARIES OF PAPERS PRESENTED AT THE CONFERENCE ON LASERS AND ELECT, Seiten 118-119, XP002231713 2001, Washington, DC, USA, Opt. Soc. America, USA ISBN: 1-55752-662-1 * Seite 118, Spalte 3, Zeile 14 - Zeile 17 * | 1-10 | H01S3/067 H01S3/098 |
| A | KIM H K ET AL: "Polarization control of polarimetric fiber-laser sensors" OPTICS LETTERS, 1 SEPT. 1993, USA, Bd. 18, Nr. 17, Seiten 1465-1467, XP000388167 ISSN: 0146-9592 * Zusammenfassung * | 1 | |
| A | US 5 561 675 A (BAYON JEAN-FRAN OIS ET AL) 1. Oktober 1996 (1996-10-01) * Zusammenfassung * | 1 | |

RECHERCHIERTE SACHGEBIETE (Int.Cl.7)

H01S

Der vorliegende Recherchenbericht wurde für alle Patentansprüche erstellt

| Recherchenort | Abschlußdatum der Recherche | Prüfer |
|---|---|---|
| DEN HAAG | 19. Februar 2003 | Galanti, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.**                    EP 02 40 5363

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2003

| Im Recherchenbericht angeführtes Patentdokument | Datum der Veröffentlichung | Mitglied(er) der Patentfamilie | Datum der Veröffentlichung |
|---|---|---|---|
| US 5561675 A | 01-10-1996 | FR 2720198 A1 | 24-11-1995 |
| | | DE 69511166 D1 | 09-09-1999 |
| | | DE 69511166 T2 | 16-12-1999 |
| | | EP 0683550 A1 | 22-11-1995 |

EPO FORM P0461

Für nähere Einzelheiten zu diesem Anhang : siehe Amtsblatt des Europäischen Patentamts, Nr.12/82